# EUROPÄISCHE PATENTSCHRIFT

(11) **EP 3 513 044 B1**
(45) Veröffentlichungstag und Bekanntmachung des Hinweises auf die Patenterteilung: **12.10.2022**
(21) Anmeldenummer: 17755444.1
(22) Anmeldetag: 08.08.2017
(51) Int. Cl.: F01K 3/00, F01K 3/12, F22B 1/00

(54) **VERFAHREN ZUR ENERGIESPEICHERUNG UND ENERGIEABGABE IN EIN ENERGIEVERSORGUNGSNETZ, DRUCKGASSPEICHERKRAFTWERK UND COMPUTERPROGRAMM**
METHOD FOR STORING ENERGY AND FOR DISPENSING ENERGY INTO AN ENERGY SUPPLY GRID, PRESSURIZED GAS STORAGE POWER PLANT AND COMPUTER PROGRAM
PROCÉDÉ DE STOCKAGE D'ÉNERGIE ET DE RESTITUTION D'ÉNERGIE DANS UN RÉSEAU D'ALIMENTATION EN ÉNERGIE, CENTRALE ÉLECTRIQUE À STOCKAGE DE GAZ SOUS PRESSION ET PROGRAMME INFORMATIQUE

(30) Priorität: 19.08.2016 DE 102016115421
(43) Veröffentlichungstag der Anmeldung: 24.07.2019
(73) Patentinhaber: erneo Energiespeichersysteme GmbH, 31515 Wunstorf (DE)
(72) Erfinder: LITTMANN, Wolfgang, 31515 Wunstorf (DE)
(74) Vertreter: Gramm, Lins & Partner Patent- und Rechtsanwälte PartGmbB
(86) Internationale Anmeldenummer: PCT/EP2017/070085
(87) Internationale Veröffentlichungsnummer: WO 2018/033437

(56) Entgegenhaltungen:
- CN-B- 103 452 612
- DE-A1- 2 636 417
- FR-A1- 2 981 400
- US-A- 4 353 214
- US-A1- 2010 251 712
- US-A1- 2015 000 248

## Beschreibung

Die Erfindung betrifft ein Verfahren zur Energiespeicherung und Energieabgabe in ein Energieversorgungsnetz mittels eines Druckgasspeicherkraftwerks, das wenigstens einen ersten und einen davon getrennten zweiten Speicherraum aufweist, wobei zur Energiespeicherung Druckgas aus dem Speicherraum mit dem geringeren Druck entnommen wird, über eine Kompressionsmaschine verdichtet wird und das aus der Kompressionsmaschine austretende, verdichtete Druckgas in den anderen Speicherraum geführt wird, und zur Energieabgabe Druckgas aus dem Speicherraum mit dem höherem Druck entnommen wird, durch eine Expansionsmaschine geführt wird und das aus der Expansionsmaschine austretende, entspannte Druckgas in den anderen Speicherraum überführt wird, wobei von der Expansionsmaschine Energie an das Energieversorgungsnetz abgegeben wird. Die Erfindung betrifft außerdem ein dementsprechendes Druckgasspeicherkraftwerk sowie ein Computerprogramm zur Durchführung des Verfahrens.

Allgemein betrifft die Erfindung das Gebiet der Energiespeicherung für aus regenerativen Quellen erzeugte Energie, wie z.B. Windkraft oder Solarstrom. Da diese Arten der Energieerzeugung wetterbedingt mit Unregelmäßigkeiten behaftet sind, gewinnt die Notwendigkeit zur Speicherung von Energie immer größere Bedeutung. Neben der elektrochemischen Speicherung, die relativ aufwendig ist, gibt es bereits Vorschläge, eine Speicherung als mechanische Energie durchzuführen, z.B. in sogenannten Pumpspeicherwasserkraftwerken oder Druckluftspeicherkraftwerken. Pumpspeicherkraftwerke sind bisher an die geologischen obertägigen Bedingungen lokal gebunden und Neuprojekte stoßen aufgrund des sichtbaren Eingriffs in die Natur auf gesellschaftliche Akzeptanzprobleme. Druckluftspeicherkraftwerke sind wegen der Möglichkeit der Untertageinstallation der Hohlräume gesellschaftlich akzeptabel, weisen jedoch bisher relativ niedrige Wirkungsgrade und somit eine geringe Energieeffizienz auf. Pumpspeicherkraftwerke werden daher bisher nur in Landschaften mit entsprechenden Höhenunterschiede realisiert. In Landschaften wie der norddeutschen Tiefebene oder auf offener See, wo ein großer Teil der Windenergie erzeugt wird, erweist sich der Einsatz von konventionellen Pumpspeicherwasserkraftwerken als unrealistisch.

Aus der Veröffentlichung "ADELE - Der adiabate Druckluftspeicher für die Elektrizitätsversorgung" der Firma RWE geht ein Vorschlag hervor, die Druckluftspeicherung energieeffizienter zu gestalten, indem die bei der Verdichtung der Luft auftretende Wärme gespeichert wird und die gespeicherte Wärme bei der Wiederabgabe von Energie, d.h. der Expansion der Druckluft, dieser wieder zugeführt wird, um Vereisungsprobleme zu vermeiden und den Wirkungsgrad der Anlage in einen akzeptablen Bereich zu bringen. Allerdings sind sich die Verfasser dieser Schrift bewusst, dass technische Herausforderungen bei der Speicherung und dementsprechend auch bei der Expansion der Druckluft entstehen, wie z.B. Temperaturen von über 600 Grad Celsius. Bei solchen Temperaturen sind die zu verwendenden Anlagen, insbesondere Kompressoren und Expansionsmaschinen, mit hohem Aufwand zu optimieren. Zudem ist abzusehen, dass bei solchen Temperaturen auch die effiziente Wärmespeicherung hohe Anforderungen stellt. Die US 2010/0251712 A1 offenbart ein ähnliches System wie ADELE.

Gegenüber solchen Ansätzen wird durch das in der WO 2013/064276 A2 vorgeschlagene Druckgasspeicherkraftwerk bereits ein erheblicher Fortschritt erzielt. Auch dort wird durch ein adiabatisches Funktionsprinzip ein hoher Wirkungsgrad erreicht, und zwar ohne dass die zuvor erwähnten, extrem hohen Temperaturen auftreten. Dies wird dadurch ermöglicht, dass durch die wenigstens zwei Speicherräume ein geschlossenes System bereitgestellt wird, in dem das Druckgas zwischen dem einen und dem anderen Speicherraum hin- und her bewegt werden kann, ohne dass das Druckgas bei der energieerzeugenden Expansion in die Atmosphäre entlassen werden muss. Vielmehr kann das Druckgas beim Fördern von einem Speicherraum mit dem höheren Druck in einen Speicherraum mit geringerem Druck auf einem gewissen Mindest-Druckniveau gehalten werden, das erheblich höher ist als das Atmosphärendruckniveau. Hierdurch wird das Verhältnis zwischen der im Gas enthaltenen Kompressionsenergie p▪V im Verhältnis zu der bei der Kompression oder der Expansion entstehenden Temperaturdifferenz erheblich verbessert. Ein solches Druckgasspeicherkraftwerk kann auch ohne besondere Erwärmungs- und Kühlungseinrichtungen bereits effizient betrieben werden, ohne dass große Temperaturänderungen auftreten, z.B. bei Temperaturänderungen von nur wenigen 10 Grad Celsius, wie z.B. 10 Grad Celsius bis 20 Grad Celsius. Dementsprechend lässt sich ein solches adiabatisches Druckgasspeicherkraftwerk im Vergleich zum ADELE-Projekt mit erheblich geringerem Aufwand realisieren. Für den Betrieb ist keine Speicherung der bei der Kompression auftretenden Wärme erforderlich. Dementsprechend muss auch keine Wärme zugeführt werden, wenn die Expansion zur Energieabgabe an das Energieversorgungsnetz durchgeführt wird. Konsequenterweise offenbart die WO 2013/064276 A2 in der Figur 2, die ein solches Druckgasspeicherkraftwerk zeigt, dementsprechend auch eine Anordnung ohne Wärmetauscher oder sonstige Erwärmungseinrichtung zur Erwärmung des Druckgases. Dies hat den Vorteil, dass das dortige Druckgasspeicherkraftwerk relativ einfach technisch realisierbar ist.

Der Erfindung liegt die Aufgabe zugrunde, ein solches Druckgasspeicherkraftwerk, wie aus der WO 2013/064276 A2 bekannt, und ein entsprechendes Verfahren zur Energiespeicherung und Energieabgabe noch effizienter zu gestalten.

Diese Aufgabe wird mit einem Verfahren gemäß Anspruch 1 gelöst. Dies beinhaltet, dass das Druckgas vor oder bei der Zuführung zur Expansionsmaschine mittels einer Erwärmungseinrichtung erwärmt wird. Im Unterschied zu anderen Energiespeicherverfahren oder Kraftwerken, wie z.B. ADELE, wird durch eine solche Vorwärmung des Druckgases bei dem erfindungsgemäßen adiabatischen Druckluftspeicherverfahren mit den wenigstens zwei Speicherräumen eine Reihe von überraschenden synergistischen Effekten erzielt, die bei anderen Kraftwerkstypen nicht auftreten und daher nicht ohne Weiteres zu erwarten waren.

Wie erwähnt, erfordert es das adiabatische Druckgas-Energiespeicherverfahren und das Druckgasspeicherkraftwerk gemäß WO 2013/064276 A2 eigentlich nicht, dass eine Erwärmung des Druckgases vor der Expansion erfolgt, und dementsprechend ist dort auch keine Erwärmungseinrichtung vorgesehen. Der entsprechende Aufwand kann an sich eingespart werden. Jedoch zeigen Beispielrechnungen, dass bereits durch eine relativ geringe Erwärmung des Druckgases vor oder bei der Zuführung zur Expansionsmaschine um wenige 10 Grad Celsius schon eine Erhöhung der abgegebenen Leistung der Expansionsmaschine um zirka 70% erreicht werden kann, wie nachfolgend noch anhand von Beispielrechnungen gezeigt werden wird. In den Beispielrechnungen wurde von einer Temperaturerhöhung des Druckgases durch die Erwärmungseinrichtung von nur 25 Grad Celsius ausgegangen.

Beim erfindungsgemäßen Verfahren kann somit auf einfache Weise Wärme in einem Wärmeaustauschprozess dem Druckgas zugeführt werden. Hierbei genügen, anders als beim Stand der Technik in anderen Anlagen, vergleichsweise kleine Temperaturerhöhungen von beispielsweise 10 - 50 Grad Celsius. Diese zugeführte Wärme wird in dem Prozess nahezu vollständig in Bewegungsenergie und Strom umgewandelt.

Man erkennt, dass bei der vorliegenden Erfindung erhebliche Verbesserungen der Effizienz und des Wirkungsgrads der Druckgas-Energiespeicherung und Energieerzeugung bei moderaten Temperaturen möglich sind. Dies erlaubt es insbesondere, Wärmeenergiequellen zu nutzen, die bisher für solche Kraftwerksarten überhaupt nicht in Betracht gezogen wurden, sondern dort solche Wärmemengen als "Abfallwärme" einklassifiziert wurden. Durch das erfindungsgemäße Verfahren und das erfindungsgemäße Druckgasspeicherkraftwerks kann nun auch solche vermeintliche "Abfallwärme" mit erheblichem Nutzen eingesetzt werden.

Ein weiterer Vorteil ist, dass die für die Realisierung der Erfindung erforderlichen Anlagen und deren Komponenten weiterhin von einfacher und kostengünstiger Art sein können. Es werden keine besonderen technischen Anforderungen an die Maschinen, insbesondere Dichtungen, und Rohrleitungen gestellt. Auch die Wärmeisolation für eine Wärmezuführung und -speicherung ist mit konventionellen Mitteln leicht in den Griff zu kriegen.

Im Unterschied zu anderen Vorschlägen werden somit ein reines Druckgasspeicherverfahren und ein entsprechendes reines Druckgasspeicherkraftwerk vorgeschlagen, bei dem keine zusätzlichen Brennstoffe erforderlich sind, um Energie zu erzeugen (mittels eines Verbrennungsvorgangs). Bei der vorliegenden Erfindung kann die Energieabgabe in das Energieversorgungsnetz ausschließlich durch die Entspannung des Druckgases durch die Expansionsmaschine erfolgen. Die Expansionsmaschine ist mit einem elektrischen Generator verbunden, der die Energie in Form elektrischer Energie in das Energieversorgungsnetz abgibt.

Das Energieversorgungsnetz kann ein öffentliches und/oder ein nicht-öffentliches Energieversorgungsnetz sein. Als Energieversorgungsnetz gilt dabei auch eine direkte Energieabgabe an Stromabnehmer.

Die Kompressionsmaschine kann z.B. als elektrisch angetriebener Kompressor ausgebildet sein. Das Druckgas kann z.B. Druckluft oder ein anderes Gas oder ein Gasgemisch sein, z.B. Erdgas. Die Erwärmungseinrichtung kann z.B. als Wärmetauscher und/oder als elektrisches Heizelement (Heizspirale) ausgebildet sein.

In dem ersten und dem zweiten Speicherraum herrschen normalerweise unterschiedliche Drücke vor, sodass entweder der erste Speicherraum oder der zweite Speicherraum den Speicherraum mit dem geringeren Druck bildet und der jeweils andere Speicherraum den Speicherraum mit dem höheren Druck. Sofern außerdem ersten und dem zweiten Speicherraum noch weitere Speicherräume vorhanden sind, so können diese weitere, unterschiedliche Druckniveaus aufweisen. Es kann in dem ersten und dem zweiten Speicherraum und ggf. weiteren Speicherräumen auch der Fall gleichen Drucks auftreten, was aber einen Übergangszustand darstellt, der in der Regel nicht lange gehalten wird und dementsprechend für den Betrieb des Druckgasspeicherkraftwerks nicht praxisrelevant ist.

Gemäß der Erfindung ist vorgesehen, dass das Druckgas durch die Erwärmungseinrichtung um maximal 50 Grad Celsius erwärmt wird. Auf diese Weise kann das erfindungsgemäße Verfahren in Temperaturbereichen betrieben werden, die hinsichtlich der zu verwendenden Komponenten und der Wärmeisolation gut handhabbar ist. Gemäß einer vorteilhaften Weiterbildung der Erfindung kann vorgesehen sein, dass das Druckgas durch die Erwärmungseinrichtung um maximal 30 Grad Celsius erwärmt wird.

Gemäß einer vorteilhaften Weiterbildung der Erfindung ist vorgesehen, dass das Druckverhältnis (Kompressionsverhältnis) zwischen den Drücken in dem ersten und dem zweiten Speicherraum maximal 1 zu 5 beträgt. Auf diese Weise lässt sich ein adiabatisches Druckgasspeicherverfahren realisieren, bei dem der Wirkungsgrad hoch ist und die auftretenden Temperaturunterschiede beim Komprimieren und Expandieren des Druckgases gering gehalten werden. Gemäß einer vorteilhaften Weiterbildung der Erfindung kann das Druckverhältnis maximal 1 zu 4 betragen, oder maximal 1 zu 2,5.

Gemäß einer vorteilhaften Weiterbildung der Erfindung ist vorgesehen, dass die Erwärmungseinrichtung mit einer Wärmespeicheranlage verbunden ist, in der vorgewärmtes Wärmespeichermedium vorhanden ist, das zur Erwärmung des Druckgases durch die Erwärmungseinrichtung geleitet wird. Auf diese Weise kann ein Wärmekreislauf gebildet werden. Das Wärmespeichermedium kann insbesondere ein flüssiges Medium sein.

Für die eigentliche Wärmespeicherung muss nicht zwangsläufig ein flüssiges Wärmespeichermedium eingesetzt werden. Die Wärmespeicherung kann auch durch Festkörper durchgeführt werden, d.h. mit einem Festkörper-Wärmespeicher.

Gemäß einer vorteilhaften Weiterbildung der Erfindung ist vorgesehen, dass als Wärmespeichermedium eine Flüssigkeit mit einer Siedetemperatur von maximal 100 Grad Celsius bei 1,013 Bar Atmosphärendruck verwendet wird. Somit kann als Wärmespeichermedium z.B. Wasser verwendet werden, was den Vorteil hat, dass es allgemein verfügbar, leicht zu handhaben und umweltfreundlich ist.

Gemäß einer vorteilhaften Weiterbildung der Erfindung ist vorgesehen, dass das Druckgas mittels der bei der Kompression des Druckgases erzeugten und gespeicherten Wärme, mittels zugeführter Energie aus erneuerbaren Energiequellen und/oder mittels Erdwärme erwärmt wird. Auf diese Weise kann die für die Vorwärmung des Druckgases notwendige Wärme günstig bereitgestellt werden. Die Wärme kann z.B. im Wärmespeichermedium zwischengespeichert werden. Wird die Wärme mittels zugeführter Energie aus erneuerbaren Energiequellen erzeugt, so kann hierfür z.B. elektrischer Strom von Windenergieanlagen oder Solarzellenanlagen genutzt werden und mittels eines elektrischen Heizers in Wärme umgewandelt werden. Es kann auch beispielsweise direkt durch Sonnenkollektoren gewonnene Wärme genutzt werden. In diesem Fall kann die durch die Sonnenkollektoren erwärmte Flüssigkeit direkt als Wärmespeichermedium genutzt werden. Allgemein kann vorgesehen sein, dass das Wärmespeichermedium mittels der bei der Kompression des Druckgases erzeugten Wärme, mittels zugeführter Energie aus erneuerbaren Energiequellen und/oder mittels Erdwärme erwärmt wird.

Gemäß einer vorteilhaften Weiterbildung der Erfindung wird bei der Expansion von Druckgas aus einem Speicherraum der Gasausdruck in diesem Speicherraum nicht unter einen vorbestimmten Mindestdruckwert, z.B. nicht unter 60 bis 100 bar, abgesenkt. Dies hat den Vorteil, dass die Energieeffizienz der Gasdruckspeicherung gegenüber konventionellen Druckluftspeicherkraftwerken erheblich erhöht werden kann. Dies ist im Wesentlichen begründet durch den physikalischen Effekt, dass für die Kompression von einem Mol eines Gases z.B. 1 bar auf 10 bar genauso viel Wärme anfällt wie bei einer Druckerhöhung von 10 bar auf 100 bar, wobei hingegen die im Gas enthaltene Kompressionsenergie p▪V bei einem höheren Druckniveau entsprechend proportional höher ist. Dadurch, dass mit dem erfindungsgemäßen Kraftwerk die Gasdruckspeicherung und Expansion immer auf insgesamt relativ hohen Druckniveaus durchgeführt werden kann, kann eine relativ hohe Kompressionsenergie bei zugleich nur gering auftretenden Temperaturdifferenzen realisiert werden, sodass bei einer derartigen Fahrweise eine geringere thermische und mechanische Belastung der Kavernen, Leitungen und Maschinen auftritt.

Gemäß einer vorteilhaften Weiterbildung der Erfindung wird die zeitliche Änderung des Gasdrucks des Druckgases bei der Entnahme des Druckgases aus einem Speicherraum und/oder bei der Zuführung des Druckgases in einen Speicherraum auf einen vorbestimmten Grenzwert begrenzt. Dies hat den Vorteil, dass die Speicherräume, die mit Druckgas befüllt sind, bei einer Gasdruckänderung geschont werden und vorgegebene Belastungsgrenzen eingehalten werden.

Die eingangs genannte Aufgabe wird ferner gelöst durch ein Druckgasspeicherkraftwerk gemäß Anspruch 6. Dies umfasst wenigstens einen ersten und einen davon getrennten zweiten Speicherraum, wenigstens eine Kompressionsmaschine und wenigstens eine Expansionsmaschine, wobei die Kompressionsmaschine und/oder die Expansionsmaschine über Druckgasleitungen permanent oder über schaltbare Ventile mit dem ersten und/oder dem zweiten Speicherraum verbunden sind, wobei die Kompressionsmaschine zum wahlfreien Erzeugen eines Gasdrucks eines Druckgases in dem ersten und/oder dem zweiten Speicherraum eingerichtet ist, und mit einer Erwärmungseinrichtung, die zum Erwärmen des Druckgases vor oder bei Zuführung des Druckgases zur Expansionsmaschine eingerichtet ist. Auch hierdurch können die zuvor erläuterten Vorteile realisiert werden. Das Druckgasspeicherkraftwerk kann insbesondere zur Ausführung eines Verfahrens der zuvor erläuterten Art eingerichtet sein. Dies kann z.B. dadurch realisiert werden, dass das Druckgasspeicherkraftwerk eine Steuereinrichtung aufweist, die zur Steuerung der Komponenten des Druckgasspeicherkraftwerks gemäß einem Verfahren der zuvor erläuterten Art eingerichtet ist. Die Steuereinrichtung kann z.B. als elektronische Steuereinrichtung ausgebildet sein, z.B. als computergesteuerte Steuereinrichtung mit einem Rechner, auf dem ein Computerprogramm ausgeführt wird.

Dementsprechend wird die eingangs genannte Aufgabe auch gelöst durch ein Computerprogramm mit Programmcodemitteln, eingerichtet zur Durchführung eines Verfahrens der zuvor erläuterten Art, wenn das Programm auf einem Rechner ausgeführt wird, z.B. auf einem Rechner der Steuereinrichtung. Auch hierdurch können die zuvor erläuterten Vorteile realisiert werden.

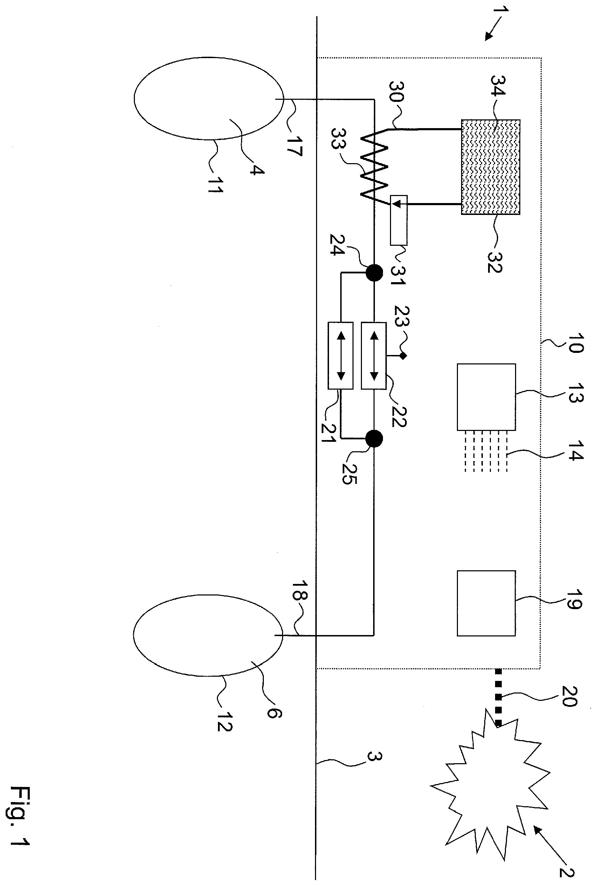

Die Erfindung wird nachfolgend anhand eines Ausführungsbeispiels unter Verwendung der Figur 1 näher erläutert.

Die Figur 1 zeigt ein Druckgasspeicherkraftwerk 1, das über elektrische Leitungen 20 mit einem öffentlichen oder nicht-öffentlichen elektrischen Energieversorgungsnetz 2 verbunden ist, welches auch direkte Stromanbieter oder Stromabnehmer beinhalten kann. Das Druckgasspeicherkraftwerk 1 ist dazu eingerichtet, in dem Energieversorgungsnetz 2 überschüssige Energie kurz-, mittel- oder langfristig zu speichern und bei einem zusätzlichen Energiebedarf in dem Energieversorgungsnetz 2 wiederum elektrische Energie an das Energieversorgungsnetz 2 abzugeben.

Hierzu weist das Druckgasspeicherkraftwerk 1 einen ersten Speicherraum 11 sowie einen zweiten Speicherraum 12 auf. Der erste und/oder der zweite Speicherraum 11, 12 kann Untertage angeordnet sein, d.h. in einer wesentlichen Tiefe unterhalb der Erdoberfläche 3, oder Übertage oder im Bereich der Erdoberfläche 3 angeordnet sein.

Das Druckgasspeicherkraftwerk 1 weist eine Reihe von in Figur 1 beispielhaft überirdisch, d.h. oberhalb der Erdoberfläche 3, angeordneten Aggregaten auf, die in einem Kraftwerksblock 10 zusammengefasst sein können. Der Kraftwerksblock 10 kann z.B. als Kraftwerksgebäude ausgebildet sein. Selbstverständlich können auch einzelne oder alle Aggregate unterhalb der Erdoberfläche 3 oberflächennah oder auch in einer größeren Tiefe angeordnet sein. Aus Gründen der praktischen Realisierbarkeit des Druckgasspeicherkraftwerk hat es jedoch Vorteile, die Aggregate überirdisch anzuordnen.

In dem Kraftwerksblock 10 befindet sich eine Steuereinrichtung 13, die z.B. als Steuerrechner oder Leitrechner des Druckgasspeicherkraftwerk 1 ausgebildet sein kann, z.B. in Form eines Computers. Die Steuereinrichtung 13 ist über symbolisch dargestellte elektrische Leitungen 14 mit den einzelnen Aggregaten verbunden, um diese zu steuern bzw. um Messdaten von diesen aufzunehmen. Die Steuereinrichtung 13 ist ferner über die Leitungen 14 mit einer Energieanforderungsschnittstelle verbunden, über die von außen z.B. von Kraftwerksbetreibern oder Energieversorgern, Energiespeicherungsanforderungen und Energieabgabeanforderungen empfangen werden können. Die Steuereinrichtung 13 verarbeitet diese Anforderungen und steuert die Aggregate je nach Anforderung derart, dass entweder elektrische Energie von dem Energieversorgungsnetz 2 in dem Druckgasspeicherkraftwerk 1 eingespeichert wird oder daraus wieder an das Energieversorgungsnetz 2 abgegeben wird.

Das Druckgasspeicherkraftwerk 1 weist insbesondere folgende Aggregate auf. Eine Expansionsmaschine 21 und eine Kompressionsmaschine 22 sind über eine steuerbare Ventilanordnung 24 auf der einen Seite mit einer in den ersten Speicherraum 11 führenden Druckgasleitung 17 und auf der anderen Seite mit einer in den zweiten Speicherraum 12 führenden Druckgasleitung 18 verbunden. Die Expansionsmaschine 21 kann z.B. eine Gasturbine mit Generator sein, die Kompressionsmaschine 22 kann z.B. ein elektrisch angetriebener Kompressor sein. Die Kompressionsmaschine 22 ist mit einem zweiseitigen Pfeil gekennzeichnet, denn sie ist je nach Steuerung der steuerbaren Ventilanordnung 24, 25 durch die Steuereinrichtung 13, in der Lage, Druckgas von dem ersten Speicherraum 11 in den zweiten Speicherraum 12 zu fördern und dabei den Gasdruck in dem zweiten Speicherraum 12 zu erhöhen, und entsprechend umgekehrt Druckgas von dem zweiten Speicherraum 12 in den ersten Speicherraum 11 zu fördern. Die Kompressionsmaschine 22 wird aktiviert, Energie vom Energieversorgungsnetz 2 im Druckgasspeicherkraftwerk 1 eingespeichert werden soll. Die Kompressionsmaschine 22 kann z.B. mit einem Anschluss 23 verbunden sein, über den ggf. zusätzliches Druckgas aus der Atmosphäre oder einem mit dem Anschluss 23 verbundenen Gasnetz in den Druckgaskreis eingespeichert werden kann.

Sofern Energie an das Energieversorgungsnetz 2 abgegeben werden soll, wird Druckgas von einem Speicherraum mit höherem Gasdruck über die Expansionsmaschine 21 in einen Speicherraum mit niedrigerem Gasdruck transportiert. Dabei wird die Expansionsmaschine 21 durch Steuerung der steuerbaren Ventilanordnungen 24, 25 aktiviert. Durch das durch die Expansionsmaschine 21 fließende, expandierende Druckgas kann von der Expansionsmaschine 21 elektrische Energie erzeugt werden und an das Energieversorgungsnetz 2 abgegeben werden. Die Expansionsmaschine 21 kann ebenfalls mit dem Anschluss 23 verbunden oder verbindbar sein, um im Druckgassystem eventuell vorhandene zu große Gasmengen abzulassen.

Das Druckgasspeicherkraftwerk 1 weist eine Erwärmungseinrichtung 33 auf, z.B. in Form eines Wärmetauschers, durch die das von dem Speicherraum 11 zur Expansionsmaschine 21 geführte Druckgas 4 vorgewärmt werden kann. Wird das Druckgasspeicherkraftwerk 1 immer derart betrieben, dass der Speicherraum 11 den höheren Druck aufweist als der Speicherraum 12, so ist die eine Erwärmungseinrichtung 33 an der in Figur 1 dargestellten Position ausreichend. Soll das Druckgasspeicherkraftwerk 1 auch mit wechselnden Druckverhältnissen zwischen den Speicherräumen 11, 12 betrieben werden, derart, dass auch im Speicherraum 12 zeitweise der höhere Druck vorherrscht, ist es vorteilhaft, eine weitere Erwärmungseinrichtung 33 in der Zuleitung 18 vom Speicherraum 12 zur Expansionsmaschine 21 anzuordnen.

Die Erwärmungseinrichtung 33 kann z.B. mit einem erwärmten Wärmespeichermedium 34 durchströmt werden, das in einem Behälter 32 vorgehalten wird. Über Leitungen 30 kann das Wärmespeichermedium 34, z.B. angetrieben durch eine Pumpe 31, durch die Erwärmungseinrichtung 33 gepumpt werden. Das Wärmespeichermedium 34 kann in dem Behälter 32 beispielsweise durch überschüssige elektrische Energie aus dem Energieversorgungsnetz 2 aufgeheizt werden, oder aus anderen Quellen, z.B. bei der Kompression in der Kompressionsmaschine 22 auftretende Wärme oder aus einer der anderen, bereits erwähnten Energie- oder Wärmequellen.

Nachfolgend werden zwei Beispielberechnungen des Energieabgabeprozesses durch die Entspannung des Druckgases mittels der Expansionsmaschine 21 dargestellt. Es sei angenommen, dass im Speicherraum 11 ein Druck von 228 Bar vorliegt. Das unter diesem Druck stehende Druckgas 4 wird über die Leitung 17 durch die Expansionsmaschine 21 geleitet. Nach der Expansion wird das Druckgas über eine Leitung 18 in den Speicherraum 12 geleitet. Es sei angenommen, dass der Druck im Speicherraum 12 nach dem Einleiten des Druckgases aus der Expansionsmaschine 21 einen Wert von 81,2 Bar hat. Die Temperatur nach der Vermischung mit dem eingeleiteten Druckgas sei 31,1 Grad Celsius.

Wird dieser Expansionsprozess ohne zusätzliche Wärmezufuhr über die Erwärmungseinrichtung 33 durchgeführt, ergibt sich bei dem in der Expansionsmaschine 21 durchgeführten Entspannungsprozesses eine Druckänderung von 209,8 Bar auf 108,1 Bar, wobei eine Leistung an der Expansionsmaschine von 421 kW erzeugt wird. Das Kompressionsverhältnis zwischen dem höheren und dem niedrigeren Druck ist hierbei 1,94.

Wird über die Erwärmungseinrichtung 33 zusätzliche Wärme zum Druckgas 4 zugeführt, beispielsweise eine Temperaturerhöhung des Druckgases um 20 Grad Celsius, wird nun an der Expansionsmaschine eine Leistung von 678 kW erzielt, somit eine Leistungssteigerung von 257 kW. Hierbei wird von einer vergleichsweise kleinen Expansionsmaschine mit einer Durchflussrate von 20.000 m³/h Druckgas ausgegangen.

Setzt man eine größere Turbine ein, z.B. mit 150.000 m³/h Durchflussmenge, ergibt sich bei gleichen Ausgangsdaten an der Expansionsmaschine beim Entspannungsprozess eine Druckänderung von 210,26 Bar auf 107,96 Bar. Dabei wird eine Leistung einer Expansionsmaschine von 3,168 MW erzeugt. Das Kompressionsverhältnis ist hierbei 1,95. Dies gilt ohne zusätzliche Wärmezufuhr. Mit einer zusätzlichen Wärmezufuhr durch die Erwärmungseinrichtung 33, die eine Temperaturerhöhung des Druckgases 4 von 25 Grad Celsius zur Folge hat, wird an der Expansionsmaschine eine Leistung von 5,474 MW erzielt, somit eine Leistungssteigerung von 2,306 MW. Die dem System zugeführte Wärmeleistung von in diesem Fall 2,254 MW wird vollständig umgesetzt, im vorliegenden Beispiel erhöht sich sogar die Effizienz des Gesamtsystems durch die Änderung der spezifischen Wärme des Druckgases 4.

## Patentansprüche

1. Verfahren zur Energiespeicherung und Energieabgabe in ein Energieversorgungsnetz (2) mittels eines Druckgasspeicherkraftwerks (1), das wenigstens einen ersten und einen davon getrennten zweiten Speicherraum (11, 12) aufweist, wobei zur Energiespeicherung Druckgas (4, 6) aus dem Speicherraum (11, 12) mit dem geringeren Druck entnommen wird, über eine Kompressionsmaschine (22) verdichtet wird und das aus der Kompressionsmaschine (22) austretende, verdichtete Druckgas (4, 6) in den anderen Speicherraum (11, 12) geführt wird, und zur Energieabgabe Druckgas (4, 6) aus dem Speicherraum (11, 12) mit dem höherem Druck entnommen wird, durch eine Expansionsmaschine (21) geführt wird und das aus der Expansionsmaschine (21) austretende, entspannte Druckgas (4, 6) in den anderen Speicherraum (11, 12) überführt wird, wobei von der Expansionsmaschine (21) Energie an das Energieversorgungsnetz (2) abgegeben wird, wobei das Druckgas (4, 6) vor oder bei der Zuführung zur Expansionsmaschine (21) mittels einer Erwärmungseinrichtung (33) erwärmt wird, **dadurch gekennzeichnet, dass** das Druckgas (4, 6) durch die Erwärmungseinrichtung (33) um maximal 50 Grad Celsius erwärmt wird.

2. Verfahren nach Anspruch 1, **dadurch gekennzeichnet, dass** das Druckverhältnis zwischen den Drücken in dem ersten und dem zweiten Speicherraum (11, 12) maximal 1 zu 5 beträgt.

3. Verfahren nach einem der vorhergehenden Ansprüche, **dadurch gekennzeichnet, dass** die Erwärmungseinrichtung (33) mit einer Wärmespeicheranlage (32) verbunden ist, in der vorgewärmtes Wärmespeichermedium (34) vorhanden ist, das zur Erwärmung des Druckgases (4, 6) durch die Erwärmungseinrichtung (33) geleitet wird.

4. Verfahren nach dem vorhergehenden Anspruch, **dadurch gekennzeichnet, dass** als Wärmespeichermedium (34) eine Flüssigkeit mit einer Siedetemperatur von maximal 100 Grad Celsius bei 1,013 Bar Atmosphärendruck verwendet wird.

5. Verfahren nach einem der vorhergehenden Ansprüche, **dadurch gekennzeichnet, dass** das Druckgas (4, 6) mittels der bei der Kompression des Druckgases erzeugten und gespeicherten Wärme, mittels zugeführter Energie aus erneuerbaren Energiequellen und/oder mittels Erdwärme erwärmt wird.

## Claims

1. Method for energy storage and energy delivery into an energy supply network (2) by means of a compressed gas storage power plant (1), which has at least a first and a separate second storage chamber (11, 12), wherein for energy storage pressurized gas (4, 6) is withdrawn from the storage chamber (11, 12) with the lower pressure, is compressed via a compression machine (22) and the compressed pressurized gas (4, 6) emerging from the compression machine (22) is fed into the other storage chamber (11, 12), and for energy delivery pressurized gas (4, 6) is withdrawn from the storage chamber (11, 12) with the higher pressure, is passed through an expansion machine (21), and the expanded pressurized gas (4, 6) emerging from the expansion machine (21) is transferred to the other storage space (11, 12), thereby energy being delivered from the expansion machine (21) to the power supply network (2), the pressurized gas (4, 6) being heated by means of a heating device (33) before or during the supply to the expansion machine (21), **characterized in that** the pressurized gas (4, 6) is heated by the heating device (33) by a maximum of 50 degrees Celsius.

2. Method according to claim 1, **characterized in that** the pressure ratio between the pressures in the first and the second storage chambers (11, 12) is at most 1 to 5.

3. Method according to any one of the preceding claims, **characterized in that** the heating device (33) is connected to a heat storage system (32) in which preheated heat storage medium (34) is present, which is passed through the heating device (33) for heating the pressurized gas (4, 6).

4. Method according to the preceding claim, **characterized in that** a liquid having a boiling temperature of at most 100 degrees Celsius at 1.013 bar atmospheric pressure is used as heat storage medium (34).

5. Method according to any of the preceding claims, **characterized in that** the pressurized gas (4, 6) is heated by means of the heat generated and stored during compression of the pressurized gas, by means of supplied energy from renewable energy sources and/or by means of geothermal heat.

## Revendications

1. Procédé de stockage d'énergie et de restitution d'énergie dans un réseau d'alimentation en énergie (2) au moyen d'une centrale électrique à stockage de gaz sous pression (1), qui présente au moins un premier espace de stockage et un deuxième espace de stockage (11, 12) séparé du premier,
dans lequel, pour le stockage d'énergie, du gaz sous pression (4, 6) est prélevé dans l'espace de stockage (11, 12) présentant la pression plus faible, est comprimé par une machine de compression (22), et le gaz sous pression (4, 6) comprimé sortant de la machine de compression (22) est amené dans l'autre espace de stockage (11, 12), et
pour la restitution d'énergie, du gaz sous pression (4, 6) est prélevé dans l'espace de stockage (11, 12) présentant la pression plus élevée, est amené à travers une machine de détente (21), et le gaz sous pression (4, 6) détendu sortant de la machine de détente (21) est transféré dans l'autre espace de stockage (11, 12),
de l'énergie est fournie par la machine de détente (21) au réseau d'alimentation en énergie (2), et
le gaz sous pression (4, 6) est chauffé au moyen d'un dispositif de chauffage (33) avant ou lors de son amenée à la machine de détente (21),
**caractérisé en ce que**
le gaz sous pression (4, 6) est chauffé de 50 degrés Celsius au maximum par le dispositif de chauffage (33).

2. Procédé selon la revendication 1,
**caractérisé en ce que** le rapport de pression entre les pressions dans le premier et dans le deuxième espace de stockage (11, 12) est au maximum de 1 sur 5.

3. Procédé selon l'une des revendications précédentes,
**caractérisé en ce que** le dispositif de chauffage (33) est relié à une installation de stockage de chaleur (32) dans laquelle se présente un milieu de stockage de chaleur (34) préchauffé qui est envoyé à travers le dispositif de chauffage (33) pour chauffer le gaz sous pression (4, 6).

4. Procédé selon la revendication précédente,
**caractérisé en ce qu'**en tant que milieu de stockage de chaleur (34), on utilise un liquide ayant une température d'ébullition de 100 degrés Celsius au maximum à une pression atmosphérique de 1,013 bar.

5. Procédé selon l'une des revendications précédentes,
**caractérisé en ce que** le gaz sous pression (4, 6) est chauffé au moyen de la chaleur générée et stockée lors de la compression du gaz sous pression, au moyen d'énergie ajoutée provenant de sources d'énergie renouvelables et/ou au moyen de l'énergie géothermique.
